# EUROPEAN PATENT APPLICATION

(11) **EP 2 628 583 A1**
(43) Date of publication of application: **21.08.2013**
(21) Application number: 13380004.5
(22) Date of filing: 15.02.2013
(51) Int. Cl.: B29C 45/14, B25G 1/10, B29C 45/16, B29L 31/46

(54) **Natural coated handle and procedure**

(30) Priority: 15.02.2012 ES 201200131
(71) Applicant: Igestek Increase & Win, S.L., 48007 Bilbao Vizcaya (ES)
(72) Inventor: Fernandez Fernandez, Ricardo, 48007 Bilbao (ES)
(74) Representative: Juncosa Miro, Jaime

(57) **Abstract**

The handgrip (4) is integrally formed by a functional support (1) incorporating a natural coating (2), and between both elements there is a plastic filler (3) which has been injected through holes (8) of a partition (5) of the functional part (1) and which, when injected under pressure, makes the natural coating (2) conform the shape determined in the cavity (7) of an injection mold (10) in which it is introduced, to then continue with its manufacture. All this is done by making use of a manufacturing process having the fundamental steps of assembling the functional support (1) and the natural coating (2) leading to a bimaterial insert (9) which is positioned in the injection mold (10), and subsequently injecting the plastic filler (3), leading to the handgrip (4) with the shape determined by the cavity (7) of the injection mold (10).

## Description

### Field of the Art

The present invention relates to a handgrip assembly where a natural outer coating of leather or fabric forms an integral body with the internal structure of the handgrip. The present invention also relates to a process for manufacturing said handgrip with a natural coating by means of a single step of plastic injection molding under high or low pressure.

### Background of the Invention

Handgrip assemblies comprised of a body made of a thermoplastic material externally upholstered with a sheet of leather (hide) or fabric are known in the state of the art. These assemblies are made up of at least 3 portions: a) An inner support that performs the mechanical function of anchoring to the component to be moved (opened, raised, inserted in a notch, etc.), or gripped. b) A more or less flexible filler according to the final function desired for the handgrip or control (comfortable touch entails a soft flexible thermoplastic filler or a soft thermosetting filler such as a foam, a rigid touch entails a hard thermoplastic filler and a weight increase function entails a rigid metallic filler). c) A final aesthetic coating performing the function of decoration, of warmth, of comfort or of a high quality appearance.

In the current state of the art, an inner support is made like a single part in a mold by means of thermoplastic injection molding, which is a first phase of the process.

The obtained inner support is placed in a second operation in another mold and is over-injected with another thermoplastic by means of another injection molding, obtaining a second intermediate part, which is a second phase of the process.

This second intermediate part is manually upholstered with the outer aesthetic coating, whether it is fabric or hide. This third process is carried out in a completely handcrafted manner, manually, by means of adhesive bonding the fabric or leather, and is the third phase of the process.

This three-step process not only has the drawback of its many operations and tools, but it also does not obtain consistent quality in the obtained parts because manual upholstering means that two identical parts, either dimensionally or aesthetically, are not obtained. Throughout this upholstering process it is necessary to manually stretch the leather, fold the surplus, cut the excess and apply adhesive by means of a brush, which entails a very wide range of defects being able to occur: excessively stretched leathers and therefore without grain or with a deformed graphic; non-defined radii depending on the excess leather resulting from stretching; creases in different portions of the edges and radii; virtual impossibility to obtain flat zones with a constant flatness; concentricity defects; zones with excessive adhesive; zones with a lack of adhesive; spots of adhesive on the outside of the part; detachment of the coating from the rest of the assembly (leather or fabric becoming unglued from the thermoplastic filler); etc.

The object of the proposed invention prevents these faults by improving the final product quality as well as reducing the steps necessary for obtaining the final product by increasing productivity and reducing the final part cost.

In any case there is a number of devices and inventions which have tried to form various coverings and coatings of parts and objects intended both for decoration or ornament but they do not withstand the contact stresses that a handgrip must withstand, and said industrialized coatings are useless for this purpose, the last phase remaining completely handcrafted and manual by means of adhesive coating of the fabric or leather, to try to obtain results similar to those that are the object of the present invention, but with the aforementioned advantages represented by same.

### Brief Description of the Invention

The present invention relates to a handgrip with a completely integral coating of the filler and functional support, made in only two automated steps and therefore dimensionally, functionally and aesthetically stable.

The handgrip is made up of a functional support, a filler and an aesthetic coating.

The functional support has a specific geometry object of the invention which allows its placement in a mold such that said geometry facilitates injecting a second plastic therein and prevents the possible formation of zones with a vacuum, bubbles or internal air pockets.

The outer coating is die cut and attached such that its development allows obtaining the final geometry of the part. This coating is placed encasing the aforementioned functional support and is fastened to it forming a single part, which will be referred to as the bimaterial insert, such that the coating does not move from its position defined while injecting the thermoplastic.

This bimaterial insert is placed in a mold, correctly fastened and the plastic filler which will eventually occupy the space between coating and support, forming the final part, i.e., the handgrip, is injected. This filler will be injected by means of the supply of plastic through the support.

The three components of the assembly, i.e., the support attached to the filler which is in turn attached to the outer coating, are therefore integrally attached without needing to use adhesive, said attachments being very resistant because of the thermal action of the injection, which virtually creates a weld instead of an adhesive coating.

### Brief Description of the Drawings

The geometries that are the basis of the invention are described below by means of the drawings, which complement the specification by illustrating the preferred but by no means limiting example of the invention, as well as the steps of the manufacturing process.

The preceding and other features and advantages will be better understood from the following detailed description of an embodiment in reference to the attached drawings in which:
Fig. 1 shows a view of the functional support the geometry of which is object of the invention at one of its ends, showing how it has a series of holes through which the plastic is injected, which plastic will fill the empty space between the functional support and the natural coating once said coating is pressed against the cavity of the injection mold, which will determine the outer shape of the handgrip.
Fig. 2 shows a view of the natural coating in a single part, already die cut and prepared for being attached to the functional support.

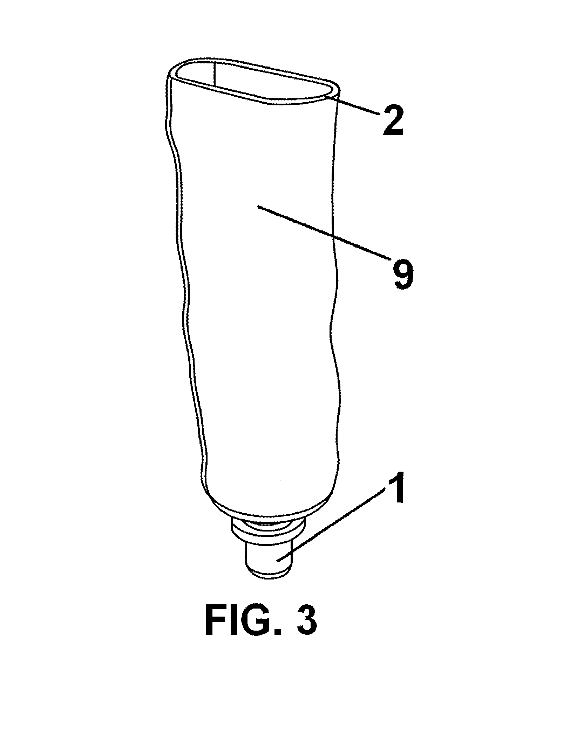

Fig. 3 shows a view of the assembly of the functional support plus the natural coating leading to the bimaterial insert object of the invention before injecting the plastic.

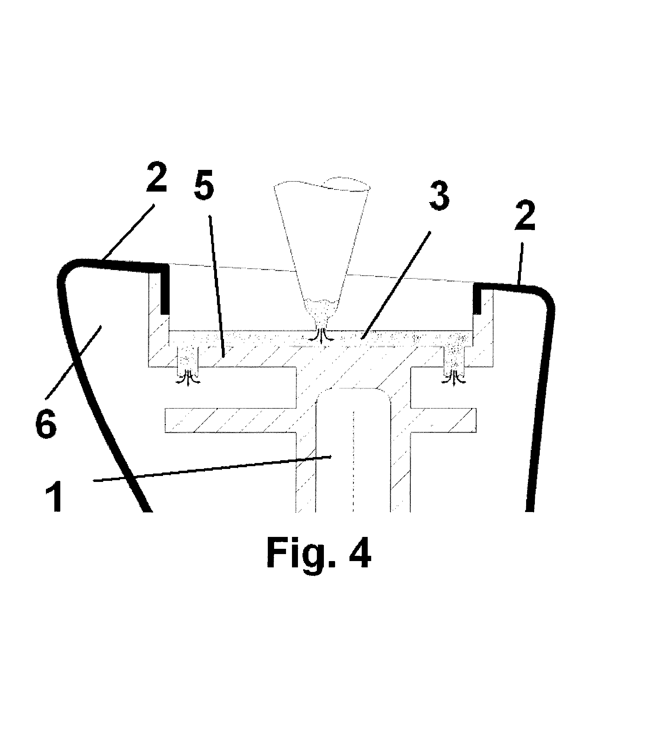

Fig. 4 shows a view of the partition of one of the ends of the functional support which has holes where the plastic filler is injected into the empty space between the functional support and the coating of the bimaterial insert.

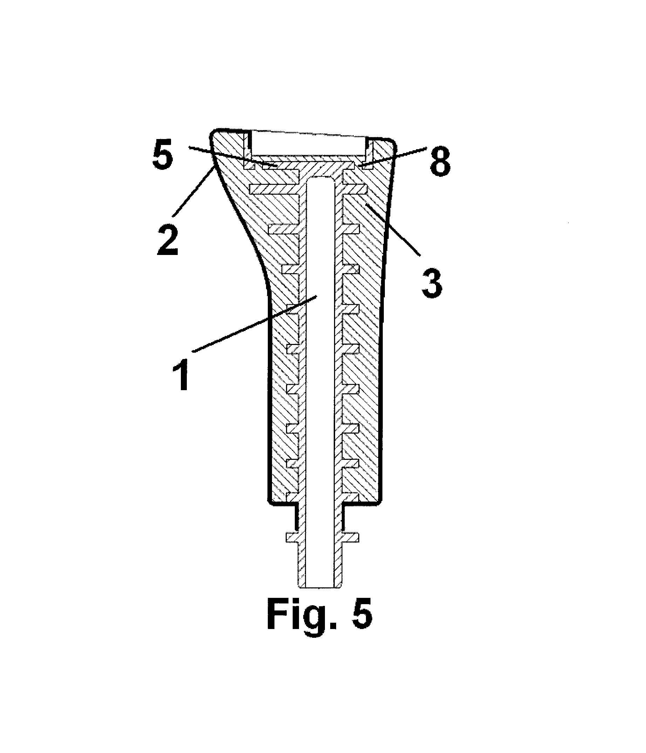

Fig. 5 shows a cross-section view of the final handgrip object of the invention once the plastic has been injected between the functional support and the natural coating, once said coating is pressed against the inner cavity of the injection mold, which will determine the outer shape of the handgrip.

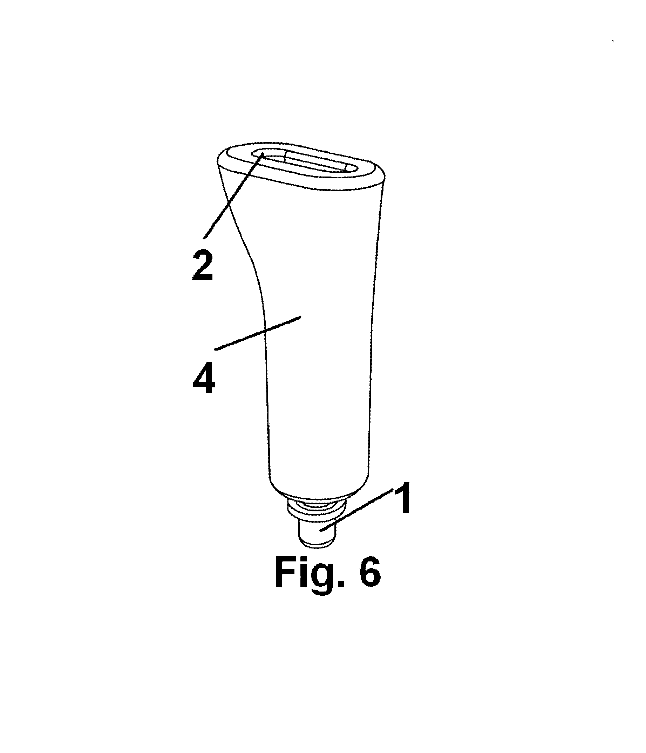

Fig. 6 shows a view of the final handgrip object of the invention, which in turn will determine the outer shape of the handgrip.

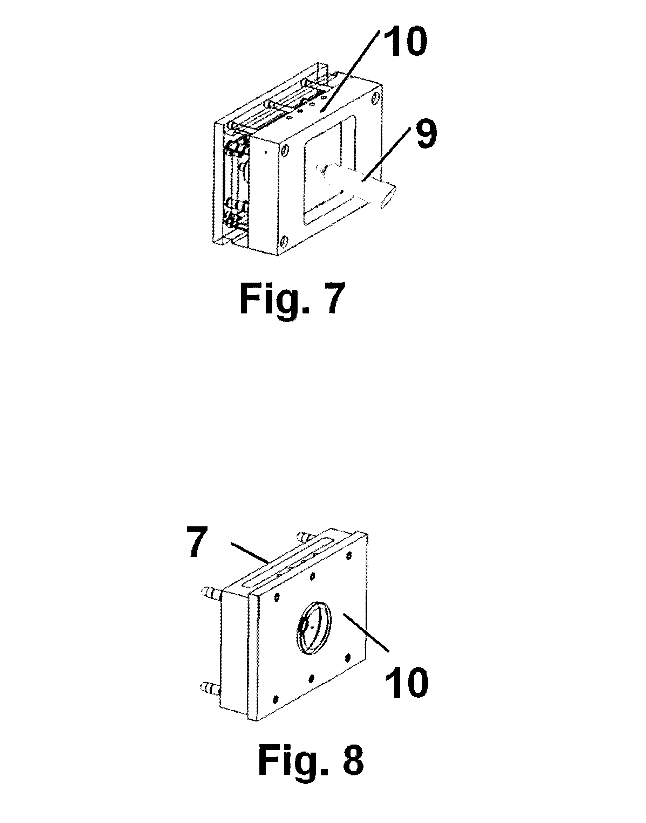

Fig. 7 shows the bimaterial insert positioned inside the open injection mold, which in turn positions one of its ends where the plastic will be injected.
Fig. 8 shows the other portion of the injection mold which has the cavity that will lead to the outer shape that the handgrip will have once the plastic is injected and expands between the functional support and the natural coating by pressing said coating against the inner cavity of the injection mold.

### Detailed Description of an Embodiment

In view of the foregoing, the present invention relates to a handgrip with a natural coating and its associated manufacturing process, the assembly in this preferred embodiment being a part having a variable directrix and generatrix referred to in the present invention as functional support 1 with a natural coating 2, preferably made of natural leather, integral with a plastic filler 3, which is in turn integral with a functional support 1.

This preferred geometry entails a functional support 1 characterized by performing the functions of bearing the coating, guiding the structure thereof, assuring the anchor to the fastening support in which it will be seated and facilitating the injection of the plastic filler 3, which will fill the space between the natural coating 2 and the functional support 1, providing the final shape to the assembly.

This functional support 1 is preferably made by means of injection molding technology using a thermoplastic material which can be: polyamide with or without a filler, polypropylene with or without a filler, ABS and its mixtures, or TPU, depending on the mechanical and structural characteristics required of the anchoring of the assembly of the handgrip 4 to the final support.

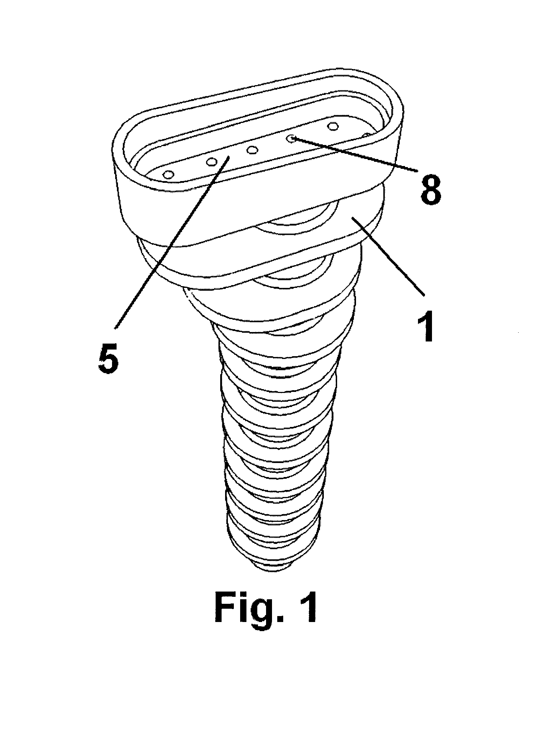

The purpose of this functional support 1 object of the invention is to support the plastic filler injection nozzle by means of a perforated partition 5 according to the preferred design of Fig. 1, directing the flow of injected plastic filler 3 to the center of the perforated partition 5 and radially distributing it under turbulent conditions, thereby favoring the filling of the clearance empty space 6, between the functional support 1 and the natural coating 2 which, once said coating is pressed against the cavity 7 of the injection mold 10, will determine the outer shape of the handgrip.

The preferred geometry of this functional support 1 has a perforated partition 5 with holes 8 located along the perimeter in the outermost zone of the perforated partition 5. This arrangement both in terms of number and diameter and the location in the partition is not at all limiting, being able to adopt an arrangement of a greater or smaller number of holes, larger or smaller diameter, location along the perimeter, etc..., without undermining the present invention,

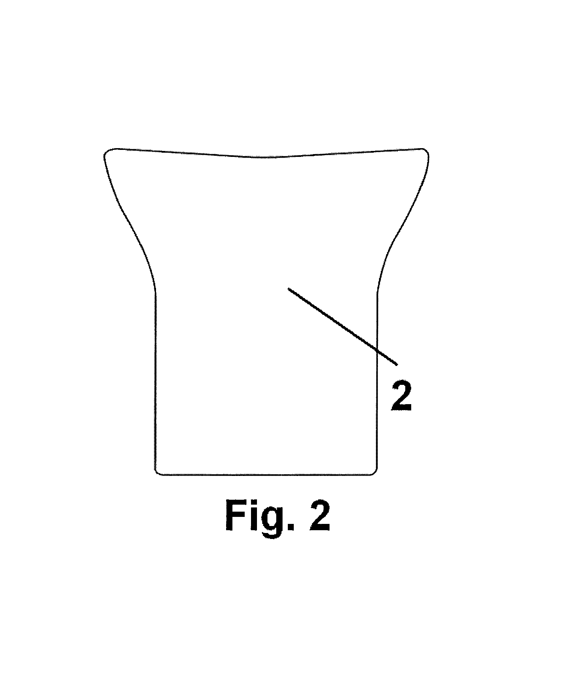

A decorative outer natural coating 2 which will be referred to as a natural coating 2 as seen in Fig. 2 and which leads to an assembly referred to as a bimaterial insert 9, is placed on this support.

According to the preferred embodiment of the invention, this natural coating 2 will be made of natural leather or hide, being able to be made without undermining the present invention, of fabric or of any other film that can be used as an outer coating.

The leather or hide used for the preferred embodiment of this invention will be a chrome-tanned leather or hide with chrome retannage again, subsequent softening and mechanical rolling. This quality of leather has provided optimal features for the parts object of the present invention even though they are not by any means exclusive.

This natural coating 2 will be duly die cut depending on the final geometry to be obtained, taking into account that the size to be die cut must be smaller than the final development of the part in order to perform a stretching operation that eliminates creases and surface defects that may occur while injecting the plastic filler 3.

According to the preferred embodiment of the invention, this natural coating 2 will be a part having a variable directrix and generatrix, having a closed section that will be attached by means of stitching the leather with thread, the seam being able to be a single or double seam, depending on the desired aesthetics. Said closing could be performed without undermining the present invention by means of any other bonding technology, such as, for example and without being limiting in any case, heat welding, adhesive coating, etc...

In the case of double seams, the second seam is merely decorative and is formed in the body of the natural coating 2, so the stitches are open, and therefore to prevent the plastic filler 3 from reaching the surface of the part, it will be necessary to place a sealing system for sealing the seam on the inner face of the natural coating 2 (non-visible face) of the leather or fabric. Said sealing will preferably be performed according to the object of this invention by means of a barrier fabric which could be placed by means of adhesive coating or welding.

This natural coating 2 may be decorated on its outer face (visible face) with bas-relief or relief obtained directly during the manufacturing process of the present invention, the natural coating 2 itself copying the details made in the injection mold 10 for injecting the plastic filler 3 by means of the injection pressure applied.

In the preferred embodiment of the invention, the natural coating 2 of the present invention will be fastened to the functional support 1 at its two ends by means of welding, pressure fitting or mechanical fitting, said fastening being able to be performed with any other technique without undermining the present invention.

The assembly of natural coating 2 and plastic functional support 1 thereby obtained is referred to as a bimaterial insert 9.

This bimaterial insert 9 will be placed in an injection mold 10 previously designed for its geometry, which mold will consist of the fasteners necessary for correctly orienting and fastening the bimaterial insert 9, the plastic filler 3 will subsequently be injected, injecting it against the inner perforated partition 5 of the functional support 1, allowing the molten plastic filler 3 to flow from the center of the partition, generating turbulent conditions with a radial distribution that will allow the molten plastic filler 3 to pass through the holes 8, filling the empty space 6 between the inside of the natural coating 2 and the functional support 1 according to the final geometry designed in the injection mold 10, stretching the natural coating 2 or leather to the inner wall of the injection mold 10.

A tempering process for tempering the leather or hide may be necessary for obtaining a part having optimal aesthetic features in the case of using natural leather or hide. Said tempering which is also object of the present invention will be performed by preferably applying an infrared plate to the bimaterial insert 9 until achieving a temperature of the part of at least 55°C, the injection mold 10 also being tempered at said temperature. This tempering could be performed in any other way without undermining the object of this invention, such as heat in a circulating air chamber with 50% Hr, heating the part outside the injection mold 10 before being placed therein for injection by means of directly supplying a flame at a distance that does not damage the outer coating, etc.

For obtaining a handgrip having optimal aesthetic features in the case of using natural leather or hide, it may be necessary to in turn apply a vacuum in the cavity 7 of the injection mold 10 for the purpose of coupling the natural coating 2 to the wall of the cavity 7 and facilitating the injection of the plastic filler, preventing the occurrence of creases and bubbles. The vacuum would be applied by means of porous inserts in the cavity 7 of the injection mold 10, and it would be controlled by means of a management electrovalve incorporated in the injection mold 10 connected to the vacuum pump of the installation.

The plastic filler 3 will be of a different chemical nature depending on the final characteristics required for the handgrip 4 assembly of the present invention. A preferred but by no means limiting embodiment of this invention could be the use of polyolefin thermoplastics, such as filler TPU, TPE for the case of a part with soft or comfortable touch, or of standard thermoplastics for a rigid part.

The preferred manufacturing process object of this invention consists of the following steps:

### Step 1- High pressure thermoplastic injection molding of the functional support 1 according to the defined geometry

This step is conventional, with high pressure injection molding technology, the functional support 1 obtained can be made automatically with dropping onto a belt or automatically with extraction by means of a robot for the direct placement of the natural coating 2 used, preferably made of leather.

### Step 2- Die cutting and stitching the coating according to the defined development of the natural coating 2

This step is performed by means of automatic or manual die cutting according to the feasibility of automatically die cutting the development of the natural coating 2 with the final geometry. The natural coating 2 obtained is a thin sheet/film with any shape. This plane must be closed to form the required final geometry. To obtain this natural coating 2, the two sides of the sheet/film must be attached. This attachment can be performed by means of different technologies: stitching with thread, heat welding, adhesive coating, pressure, mechanical fastening with an external element.

In a preferred but never limiting manner, the attachment technology used is stitching with thread.

The stitching is performed in a sewing machine manually and with one or two seams depending on the desired function: only for an attachment between the two portions of the leather or fabric or covering; inward attachment not seen in the final part; for attachment and aesthetics but with a single seam attaching the two sides of the visible leather in the final part; for attachment and decoration, with a double seam (two seams on either side of the actual attachment of the fabric).

### Step 3- Positioning the natural coating 2 on the functional support 1 and fastening same preferably by means of welding

The coating is placed on the functional support 1 either manually by means of sliding or by means of a robot, the robot coming from step 1, which when extracting the support from the injection mold performs a second operation of inserting the functional support 1 in the natural coating 2.

The two components are fastened at the two ends thereof by means of automatic welding according to the preferred variant of this invention. The welder brings the two ends of the assembly of the two components closer together and welds them along the two end perimeters of the functional support 1.

Said fastening by means of welding is not by any means limiting for this invention, adhesive coating, mechanical fitting by means of clamps or other systems already existing on the market being possible.

### Step 4- Positioning the bimaterial insert 9 obtained in step 3 inside the final injection mold 10 with the final outer geometry of the handgrip

Once the bimaterial insert 9 is formed, it must be placed in the injection mold 10 the molding cavities of which are the negative form of the final outer geometry of the handgrip.

This placement can be performed manually or automatically by means of a robot.

The injection mold 10 for this step is not a conventional mold because it must have placement elements, fasteners, directing elements, positioning elements, etc., specific for the possible injection through the support of the bimaterial insert 9 and keeping the coating with its associated decorations (straightness of the seams, maintenance of the relief and/or bas-relief shapes, flatness of the edges, etc.) in place.

### Step 5- Injecting the thermoplastic plastic filler 3 according to the aforementioned object of the invention by means of injection molding technology

The plastic filler 3 is injected under high pressure or under low pressure. Both molding technologies are compatible with the manufacturing process for manufacturing the handgrip assembly 4 object of the present invention.

The plastic filler 3 used depends on the desired final function for the assembly, any plastic filler 3 being possible, but preferably using for functions with a soft touch TPU (thermoplastic polyurethane) or TPO (thermoplastic polyolefins) or expandable materials (foams).

### Step 6- Extracting the finished part from the injection mold 10

The handgrip assembly 4 thereby obtained will be extracted from the injection mold 10 by means of an automatic robot because since the handgrip 4 is coated with a natural and aesthetic coating, has optimal quality and must be treated carefully to prevent appearance defects.

## Claims

1. A handgrip with a natural coating **characterized by** having a functional support (1) with a geometry with a variable directrix and generatrix, a decorative outer natural coating (2) completely integral with said functional support (1) by means of a plastic filler (3), said functional support (1) having at one of its ends a perforated partition (5) through which said plastic filler (3) is injected into an empty space (6) which is formed between the functional support (1) and said natural coating (2).

2. The handgrip with a natural coating according to claim 1, **characterized in that** the natural coating (2) is placed on the functional support (1) with the two components being attached by means of a weld or joint along their two outer perimeters to form a bimaterial insert (9).

3. A manufacturing process for manufacturing a handgrip with a natural coating according to claims 1 and 2, said process being characterized for the following steps:
a) plastic injection molding the functional support (1) according to the defined geometry;
b) die cutting and stitching the natural coating (2) according to the defined development and desired decorations;
c) positioning the natural coating (2) on the functional support (1) and fastening same preferably by means of attachment along its two perimeters, leading to an assembly referred to as bimaterial insert (9);
d) positioning said bimaterial insert (9) in a cavity (7) of an injection mold (10) having the final geometry of the handgrip (4);
e) injecting the plastic filler (3) by means of low or high pressure injection molding technology; and
f) extracting the finished handgrip (4) from said injection mold (10).

4. The manufacturing process for manufacturing a handgrip with a natural coating according to claim 3, **characterized in that** step a) of the process can be replaced with a machining operation of same when the support is made of a metallic or biological material.

5. The manufacturing process for manufacturing a handgrip with a natural coating according to claim 3, **characterized in that** before step e) of injecting the plastic filler (3), tempering at about 55°C both of the bimaterial insert (9) assembly and of the injection mold (10) itself is performed, as required for the good performance of the natural coating (2) in response to stretching and the pressure of the plastic filler (3) which is injected under pressure.

6. The manufacturing process for manufacturing a handgrip with a natural coating according to claim 3, **characterized in that** before step e) of injecting the plastic filler (3), a vacuum is formed in the cavity (7) of the injection mold (10) for the purpose of coupling the natural coating (2) to the wall of the cavity (7) and facilitating injecting the plastic filler (3).
